# EUROPEAN PATENT APPLICATION

(11) **EP 2 919 094 A1**
(43) Date of publication of application: **16.09.2015**
(21) Application number: 14275048.8
(22) Date of filing: 10.03.2014
(51) Int. Cl.: G06F 3/01

(54) **Interactive information display**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A system for displaying multiple sources of data within a mixed reality environment, comprising a headset with a visor (10) which is placed over a user's eyes in use. The visor (10) includes a screen and the system further comprises a processor for generating a three-dimensional virtual environment to be displayed on the screen, and within which the data is arranged for viewing by the user. The system includes one or more cameras (14) for capturing real world images in the vicinity of the user, and provides a facility for enabling selected objects from the captured images to be blended and included in the 3D virtual environment displayed on the screen. An extension of the system provides the facility for tailoring a mixed reality environment for a given application.

## Description

This invention relates to an interactive information display and data manipulation system and, more particularly, to a configurable mixed reality system for enabling selective display of information and manipulation of data by a user.

Virtual reality systems are known, comprising a headset which, when placed over a user's eyes, creates and displays a three dimensional virtual environment in which a user feels immersed and with which the user can interact in a manner dependent on the application. For example, the virtual environment created may comprise a game zone, within which a user can play a game.

More recently, augmented and mixed reality systems have been developed, an image of a real world object can be captured, rendered and placed within a 3D virtual reality environment, such that it can be viewed and manipulated within that environment in the same way as virtual objects therein. Other so-called mixed reality (MR) systems exist, comprising a headset having a transparent or translucent visor which, when placed over a user's eyes, creates a three-dimensional virtual environment with which the user can interact, whilst still being able to view their real environment through the visor.

There are many applications in which a user needs to be able to view several data sources simultaneously in order to effectively perform a task. Examples include financial institutions, such as a stock exchange, wherein a broker must be able to view financial data from several different sources simultaneously. Another example might be an aircraft control centre, in which operatives need to view large quantities of data from several different sources in order to operate effectively. Conventionally, this type of information display has been facilitated by the provision of large display screens mounted around the walls of a room so that they can be viewed simultaneously by the occupants of that room.

More recently, virtual reality systems have been developed which enable such "screens" of information to be displayed within a three-dimensional virtual room, such that when a user places the headset over their eyes, they feel immersed within a virtual room having multiple data sources displayed simultaneously in three dimensions. However, there are a number of problems associated with this type of system. Firstly, any interaction with the data within the virtual environment is effected by means of an external controller, such as a joystick or computer mouse, which detracts the user from the immersed 3D experience. Furthermore, in a completely virtual reality environment, a user can suffer from virtual reality sickness after a certain period of use, caused by the loss of bearings within their real world environment. However, in known augmented systems, where the real world environment can be seen through the visor or is blended from captured images into the virtual environment, the resultant 3D environment can become excessively cluttered and it becomes difficult for a user to focus on the important elements thereof. Still further, any skew or lack of synchronisation between real world and virtual reality images can again result in the user becoming disorientated and experiencing virtual reality sickness.

The present invention seeks to address at least some of these issues, and in accordance with a first aspect provides a mixed reality system comprising a headset for placing over a user's eyes, in use, said headset including a screen, the system further comprising a processor configured to receive data from multiple sources and display said data on said screen within a three-dimensional virtual environment, and image capture means for capturing images of the real world environment in the vicinity of the user, the processor being further configured to blend only selected portions or objects from said images of said real world environment into said three-dimensional virtual environment to create a mixed reality environment, including said data, to be displayed on the screen.

The objects selected to be displayed within the mixed reality environment may, for example, represent those with which the user may need to interact, for example, a chair, potential hazards or other areas of the real world that the user needs to remain aware of during use of the system (for example, a fire exit in case of emergency, or a doorway so that a user can monitor people entering and leaving the room), and objects which help to counteract Virtual Reality (VR) sickness. Such selection may be effected by the user, or the system itself, or a combination of both. For example, the processor may be configured to recognise from within the captured images, a sign indicating a fire exit, and always include that portion of the real world environment within the mixed reality workspace, for health and safety reasons; and the system may also be configured to additionally enable the user to select a chair or a cup of coffee, for example, to be included within the mixed reality environment, to enable them to interact with those objects, in use.

In one exemplary embodiment, the system comprises a pair of spatially separated image capture devices for capturing respective images of the real world environment in the vicinity of the user, said processor being configured to define a depth map using respective image frame pairs to produce three-dimensional image data. Said image capture devices may be mounted on said headset and are, more preferably, mounted on said headset so as to be substantially aligned with a user's eyes, in use.

In a preferred embodiment, the system is configured to allow a user to manipulate data displayed within said mixed reality environment by means of predefined hand gestures. Such manipulation may include, but is not limited to, zooming, enlarging, selecting, opening or closing a data file. The system may be further configured to allow a user to select objects, portions or people from their real world environment to be included within said mixed reality environment by means of one or more predefined hand gestures.

In accordance with a second aspect of the present invention, there is provided a mixed reality system comprising a headset for placing over a user's eyes, in use, said headset including a screen, the system further comprising a processor configured to receive data from multiple sources and display said data on said screen within a three-dimensional virtual environment, and video image capture means for capturing images of a user's hands, in use, the processor being further configured to perform data processing by sensing motion of said user's hands within said captured images and generating a control signal representative of said sensed motion, said control signal being operative to cause manipulation of said data displayed within said virtual environment in accordance with said sensed motion.

In one exemplary embodiment, the system may further comprise a database in which is stored data representative of a predefined set of hand gestures and control actions to which they relate, and said processor is configured to extract an image of a user's hand gesture from said captured images, compare said hand gesture with said predefined set of hand gestures to determine a match and, thereby, to identify a required control action, and generate a control signal operative to cause a required control action to be performed in relation to data displayed within said mixed reality environment.

In accordance with a third aspect of the present invention, there is provided a mixed reality system comprising a headset for placing over a user's eyes, in use, said headset including a screen, the system further comprising a processor configured to receive data from multiple sources and display said data on said screen within a three-dimensional virtual environment, and image capture means for capturing images of the real world environment in the vicinity of the user, the processor being further configured to blend only selected portions or objects from said images of said real world environment into said three-dimensional virtual environment to create a mixed reality environment, including said data, to be displayed on the screen; the processor being further configured to store predetermined configuration settings associated with a user, said configuration settings defining a specific display configuration of said data within said mixed reality environment based a first real world environment, and, in response to use within a second, different real world environment, to employ said configuration settings to adapt said mixed reality environment based on selected portions or objects within said second real world environment.

These and other aspects of the present invention will become apparent from the following specific description of exemplary embodiments of the present invention, which are described by way of examples only with reference to the accompanying drawings, in which:
Figure 1 is a front perspective view of a headset for use in a system according to an exemplary embodiment of the present invention;
Figure 2 is a schematic block diagram of a system according to an exemplary embodiment of the present invention;
Figure 3 is a schematic view of a mixed reality environment created by a system according to an exemplary embodiment of the present invention; and
Figure 4 is a schematic view of an image frame captured within a real world environment by the image capture device of a system according to an exemplary embodiment of the present invention.

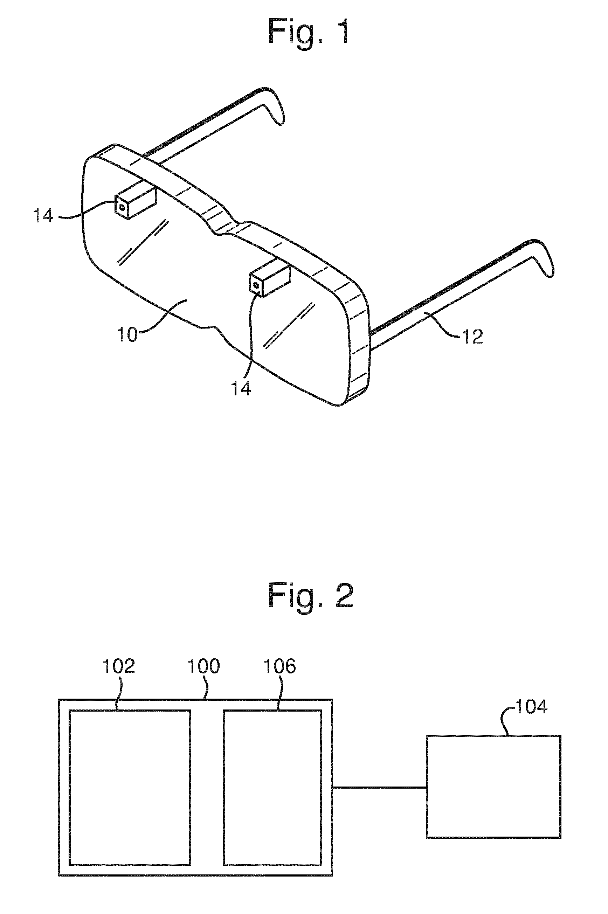

Referring to Figure 1 of the drawings, a system according to a present invention may comprise a headset comprising a visor 10 having a pair of arms 12 hingedly attached at opposing sides thereof in order to allow the visor to be secured onto a user's head, over their eyes, in use, by placing the curved ends of the arms 12 over and behind the user's ears, in a manner similar to conventional spectacles. It will be appreciated that, whilst the headset is illustrated herein in the form of a visor, it may alternatively comprise a helmet for placing over a user's head, or even a pair of contact lenses or the like, for placing within the user's eyes, and the present invention is not intended to be in any way limited in this regard. Also provided on the headset, is a pair of image capture devices 14 for capturing images of the environment, such image capture devices being mounted roughly aligned with a user's eyes in use.

The system of the present invention further comprises a processor, which is communicably connected in some way to a screen which provided inside the visor 10. Such communicable connection may be a hard wired electrical connection, in which case the processor and associated circuitry will also be mounted on the headset. However, in an alternative exemplary embodiment, the processor may be configured to wirelessly communicate with the visor, for example, by means of Bluetooth or similar wireless communication protocol, in which case, the processor need not be mounted on the headset but can instead be located remotely from the headset, with the relative allowable distance between them being dictated and limited only by the wireless communication protocol being employed. For example, the processor could be mounted on or formed integrally with the user's clothing, or instead located remotely from the user, either as a stand-alone unit or as an integral part of a larger control unit, for example.

Referring to Figure 2 of the drawings, a system according to an exemplary embodiment of the invention comprises, generally, a headset 100, incorporating a screen 102, a processor 104, and a pair of external digital image capture devices (only one shown) 106.

The processor 104 is configured to display multiple data items simultaneously within a three dimensional virtual environment. Such data items may be received from several different sources, via, for example, an Internet connection, a secure LAN, Bluetooth, or any other communications protocol, which may be wireless or otherwise. Thus, for example, such data items may include maps, communications feeds, national and international news feeds, radar and/or satellite feeds, feeds from CCTV cameras, etc., depending on the context in which the system is being used. The present invention is particularly suited to data which is continuously or periodically being updated, thereby allowing a user to see real time updates within the virtual environment, but the invention is not in any way intended to be limited in this regard, and is equally suited to displaying static data in conjunction with, or instead of, changing data. The data to be displayed may be pre-selected by the user, or it may be predefined as part of a system designed for a particular application.

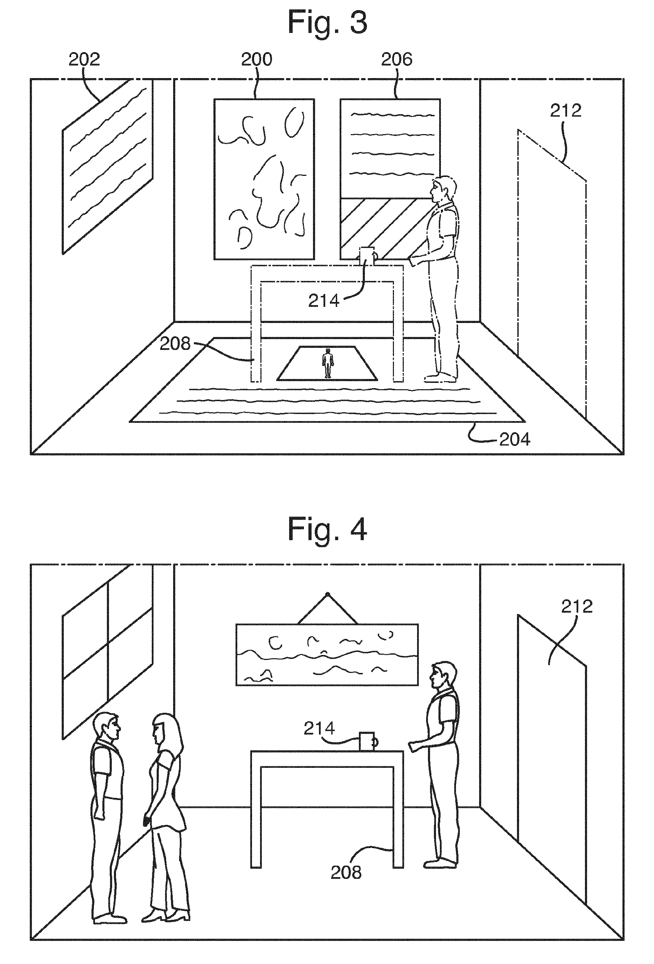

Referring to Figure 3 of the drawings, the user may be provided with a virtual environment containing a map 200, a live communications feed, a news feed 204 from an external broadcasting source and live financial data 206. The user can configure these data items within the displayed environment in any way they wish to, simply by means of hand gestures, as will be described in more detail later. Thus, for example, the user could select the map 200 and choose to move it from the "wall" in front of them, to another location on the walls, or onto the surface of the virtual table 208 or even onto the "floor" 210, as required and preferred.

Referring to Figure 4 of the drawings, there is illustrated a digital video image frame captured by the image capture devices 106 provided within the system, representative of the real world environment in the vicinity of the user. Two image capture devices are used to capture respective images and the data representative thereof blended to produce a stereoscopic depth map which enables the processor to determine depth within the captured images without any additional infrastructure being required.

The user can select portions or objects from these 3D images to be blended into the virtual environment being displayed on the screen. Thus, in the example shown in Figure 3 of the drawings, the user has selected the main entrance door 212, the coffee cup 214, the table 208 and a single colleague 216 from within their real environment to be displayed within the virtual environment. The selected objects within the live captured video images are then rendered and blended to continuously update the virtual environment to reflect activity within the real environment, as will be described in more detail later.

In this way, the user can selectively "build" their virtual environment in order to maintain the bearings within the real world and also to be able maintain an awareness of the important things that are going on around them, such as movement and hand gestures by the selected colleague and/or people entering or leaving the room.

The general concept of real time image blending for augmented reality is known, and several different techniques have been proposed. The present invention is not intended to be in any way limited in this regard. However, for completeness, one exemplary method for image blending will be briefly described. Thus, once an object has been selected from a real world image to be blended into the virtual environment, a threshold function may be applied in order to extract that object from the background image. Its relative location and orientation may also be extracted and preserved by means of marker data. Next, the image and marker data is converted to a binary image, possibly by means of adaptive thresholding (although other methods are known). The marker data and binary image are then transformed into a set of coordinates which match the location within the virtual environment in which they will be blended. Such blending is usually performed in using black and white image data. Thus, if necessary, colour data sampled from the source image is can be backward warped, using homography, to each pixel in the resultant virtual scene. All of these computational steps require minimal processing capacity and time and can, therefore, be performed quickly and in real time. Thus, if the selected object is moving, for example, a person, the corresponding image data within the virtual environment can be updated in real time.

As stated above, selection of real world elements from the captured images and also selection and manipulation of the displayed data can be effected by predefined hand gestures made by the user. Several different techniques for automated recognition of hand gestures are known, and the present invention is not in any way intended to be limited in this regard.

It will be appreciated that the image capturing module provided in the system described above can be used to capture video images of the user's hands. Thus, one relatively simple method of automated hand gesture recognition and control using captured digital video images involves the use of a database of images of predefined hand gestures and the command to which they relate. Thus, an auto threshold function is first performed on the image to extract the hand from the background. The wrist is then removed from the hand shape, using a so-called "blob" image superposed over the palm of the hand, to separate out the individual parts of the hand so that the edge of the blob defines the border of the image. The parts outside of the border (i.e. the wrist) are then removed from the image, following which shape recognition software can be used to extract and match the shape of the hand to a predefined hand gesture, and call the associated command accordingly.

In the present invention, where the user has the ability to first select the area of the virtual environment they wish to manipulate before actually performing any manipulation, it is necessary to provide some form of direction and orientation sensing, such that it can be determined where in the virtual environment the user is pointing. This can be done by any known means, for example, by image recognition within the captured images of the user's hands relative to a marker within the image, or by means of an accelerometer or similar orientation sensor mounted or otherwise provided on the user's arms or hands.

It will be appreciated that a user will configure their virtual environment according to personal preference and also the real world environment from which they can select objects and elements to be included within the virtual environment. Thus, if the user then uses the system in a different, real world environment, the overall effect may be different. The system is configured to save a particular user's specific configuration settings, i.e. the nature and source of information required, the manner and orientation in which such information is displayed, the inanimate objects selected from the real world to be blended with the virtual environment, etc. and will recall these settings each time a that user uses the system. If the user is in the same real world environment as before, the virtual environment displayed will be configured as it was before. However, if the user is determined to be in a different real world environment (from the live video images captured by the image capture device), the system is configured to adapt the display settings to match the previous display as closely as possible. This may involve setting up a free three-dimensional virtual space with the data items displayed in the same configuration and orientation as before, and allowing the user the freedom to go through the process of selecting and blending objects from the real world image into their new virtual space. Alternatively, or in addition, the system may be configured to identify inanimate objects and areas, such as a desk, the floor, a door, that match closely in size and position to those in defined within the configuration settings, and automatically blend these into the new virtual environment. The user is then free to accept the resultant environment as provided, or remove or add objects or people from the real world environment as they wish.

It will be appreciated by a person skilled in the art that modifications and variations can be made to the described embodiments without departing from the scope of the invention as claimed.

## Claims

1. A mixed reality system comprising a headset for placing over a user's eyes, in use, said headset including a screen, the system further comprising a processor configured to receive data from multiple sources and display said data on said screen within a three-dimensional virtual environment, and image capture means for capturing images of the real world environment in the vicinity of the user, the processor being further configured to blend only selected portions or objects from said images of said real world environment into said three-dimensional virtual environment to create a mixed reality environment, including said data, to be displayed on the screen.

2. A system according to claim 1, comprising a pair of spatially separated image capture devices for capturing respective images of the real world environment in the vicinity of the user, said processor being configured to define a depth map using respective image frame pairs to produce three-dimensional image data.

3. A system according to claim 2, wherein said image capture devices are mounted on said headset.

4. A system according to claim 3, wherein said image capture devices are mounted on said headset so as to be substantially aligned with a user's eyes, in use.

5. A system according to any preceding claim, configured to allow a user, in use, to manipulate data displayed within said mixed reality environment by means of predefined hand gestures.

6. A system according to any preceding claim, configured to allow a user, in use, to select objects, portions or people from their real world environment to be included within said mixed reality environment by means of one or more predefined hand gestures.

7. A system according to claim 5 or claim 6, further comprising a database in which is stored data representative of a predefined set of hand gestures and control actions to which they relate, and said processor is configured to extract an image of a user's hand gesture from said captured images, compare said hand gesture with said predefined set of hand gestures to determine a match and, thereby, to identify a required control action, and generate a control signal operative to cause a required control action to be performed in relation to data displayed within said mixed reality environment.

8. A mixed reality system comprising a headset for placing over a user's eyes, in use, said headset including a screen, the system further comprising a processor configured to receive data from multiple sources and display said data on said screen within a three-dimensional virtual environment, and video image capture means for capturing images of a user's hands, in use, the processor being further configured to perform data processing by sensing motion of said user's hands within said captured images and generating a control signal representative of said sensed motion, said control signal being operative to cause manipulation of said data displayed within said virtual environment in accordance with said sensed motion.

9. A system according to claim 8, further comprising a database in which is stored data representative of a predefined set of hand gestures and control actions to which they relate, and said processor is configured to extract an image of a user's hand gesture from said captured images, compare said hand gesture with said predefined set of hand gestures to determine a match and, thereby, to identify a required control action, and generate a control signal operative to cause a required control action to be performed in relation to data displayed within said mixed reality environment.

10. A mixed reality system comprising a headset for placing over a user's eyes, in use, said headset including a screen, the system further comprising a processor configured to receive data from multiple sources and display said data on said screen within a three-dimensional virtual environment, and image capture means for capturing images of the real world environment in the vicinity of the user, the processor being further configured to blend only selected portions or objects from said images of said real world environment into said three-dimensional virtual environment to create a mixed reality environment, including said data, to be displayed on the screen; the processor being further configured to store predetermined configuration settings associated with a user, said configuration settings defining a specific display configuration of said data within said mixed reality environment based a first real world environment, and, in response to use within a second, different real world environment, to employ said configuration settings to adapt said mixed reality environment based on selected portions or objects within said second real world environment.

11. A mixed reality system substantially as herein described with reference to the accompanying drawings.
